# FASCICULE DE BREVET EUROPEEN

(11) **EP 1 414 184 B1**
(45) Date de publication et mention de la délivrance du brevet: **20.06.2007**
(21) Numéro de dépôt: 03292508.3
(22) Date de dépôt: 10.10.2003
(51) Int. Cl.: H04L 9/32

(54) **Délégation par certificat électronique**
Delegierung mittels elektronischen Zertifikaten
Delegation using electronic certificates

(30) Priorité: 22.10.2002 FR 0213179
(43) Date de publication de la demande: 28.04.2004
(73) Titulaire: FRANCE TELECOM, 75015 Paris (FR)
(72) Inventeur: Camus, Sylvie, 91120 Palaiseau (FR); Frisch, Laurent, 75013 Paris (FR); Mouton, Dimitri, 75015 Paris (FR)
(74) Mandataire: Cabinet Martinet & Lapoux

(56) Documents cités:
- US-A- 5 224 163
- US-A1- 2001 005 841
- NEUMAN B C: "Proxy-based authorization and accounting for distributed systems" PROCEEDINGS OF THE INTERNATIONAL CONFERENCE ON DISTRIBUTED COMPUTING SYSTEMS. PITTSBURGH, MAY 25 - 28, 1993, LOS ALAMITOS, IEEE COMP. SOC. PRESS, US, vol. CONF. 13, 25 mai 1993 (1993-05-25), pages 283-291, XP010095707 ISBN: 0-8186-3770-6

## Description

Etant donnée une clé cryptographique composée d'une clé publique et d'une clé privée, l'objet fondamental permettant d'avoir confiance en la clé publique est un certificat électronique émis par une autorité de certification. Ce certificat comprend notamment la clé publique à certifier, l'identité du possesseur de la clé publique, une période de validité de certificat, une liste d'attributs d'utilisation de clé correspondant à des droits d'utilisation de la clé appelés "key usages", supportant des paramètres tels que par exemple une clé de signature de message ou une clé de serveur web sécurisé, et une signature cryptographique des données ci-dessus contenues dans le certificat par une clé publique de l'autorité de certification émettrice du certificat.

La confiance en la clé publique associée à une identité se ramène à la validité du certificat qui dépend notamment de la validité d'une "chaîne de confiance" du certificat C. La "chaîne de confiance" du certificat C est une suite finie de N certificats C1, C2, ..., Cn, Cn+1, ..., CN émis par des autorités de certification respectives AC2, ACn..., ACn+1, ..., ACN, le premier certificat C1 étant le certificat à vérifier C. La suite finie de la "chaîne de confiance" se termine par un certificat CN explicitement déclaré "certificat de confiance". Un certificat Cn est certifié par l'autorité de certification ACn+1 qui émet un certificat Cn+1. En général, le certificat de confiance CN est une racine de la chaîne de confiance et constitue un certificat auto-signé par une autorité de certification bien connue de la communauté des autres autorités de certification amenées à s'y référer. Une chaîne de confiance est validée par la validité individuelle de chacun des certificats Cn ainsi que par la validité du chaînage au niveau de chaque autorité de certification ACn+1 de manière à assurer que l'autorité de certification ACn+1 a bien signé le certificat Cn en le certificat Cn+1.

Les attributs d'utilisation de clé d'une autorité de certification inclus dans le certificat émis par cette autorité spécifient notamment la profondeur de certification autorisée. Une autorité de certification ne pouvant certifier que des usagers finaux ou des serveurs a une profondeur de certification autorisée minimale, par exemple égale à zéro. Un usager final a un attribut mentionnant qu'il n'a pas le droit d'émettre des certificats. Lorsque cet attribut n'est pas mentionné, on suppose par défaut que l'usager n'a pas le droit d'émettre des certificats ; par convention, la profondeur de certification autorisée du certificat vaut -1.

Une signature électronique garantit l'authenticité d'un document, c'est-à-dire authentifie de façon sûre un ou des signataires ayant exécuté la signature, et garantit que le document n'a pas été modifié. La signature électronique est souvent utilisée pour garantir la non-répudiation du document qui consiste à se prémunir contre un déni de l'auteur du document.

Selon une autre technique dite "multi-acteurs" ("multi-agents"), la signature électronique est une signature de groupe qui assure l'anonymat au signataire appartenant au groupe, en signant au nom du groupe.

Les formats connus de signature électronique n'offrent pas de moyen d'inclure une mention de délégation de signature.

Peu de systèmes de signature électronique permettent actuellement une délégation de signature. En particulier, aucun de ces systèmes ne prévoit une délégation de clés cryptographiques certifiées.

Lorsqu'une délégation de signature existe dans un système de signature électronique, elle concerne en général une délégation de droits, avec un moyen de gestion d'habilitations effectuée en interne par le système, ou dans les meilleurs cas via un annuaire plus général.

Par exemple, dans un flux de travail ("workflow") peut être défini un groupe de "titulaires" qui ont le droit de prendre des décisions au sein du système. Pour pallier les absences des titulaires, un ou plusieurs "délégués" peuvent être adjoints à chacun des titulaires.

Sur décision d'un titulaire, par exemple lors d'une action dans le flux de travail comme une déclaration de congés, tout ou partie des habilitations du titulaire sont attribuées au délégué pendant une période de délégation prédéterminée afin de ne pas induire une rupture de fonctionnement dans le flux de travail. Les décisions prises par le délégué au sein du flux de travail le seront au nom du titulaire.

Le plus souvent, la trace de la délégation est perdue une fois la période de délégation achevée. Dans les meilleurs cas, la délégation est retrouvée en dépouillant des relevés ou registres (logs) du flux de travail, moyennant une opération de recherche complexe et coûteuse, surtout si la recherche doit être effectuée longtemps après.

Dans le cas de flux de travail incluant de la signature électronique, où l'objet de la "décision" est la signature électronique d'un document, il n'est pas prévu dans les formats de signature électronique existants un champ "signé au nom de" permettant de retrouver le titulaire au nom duquel la signature a été effectuée par le délégué. Le document signé, une fois sorti du cadre du flux de travail pour être traité par un tiers ou archivé, par exemple, ne comporte plus que la signature du délégué, sans trace du titulaire au nom duquel le délégué a effectué la signature.

La délégation de pouvoir n'étant pas incluse dans la signature électronique ne peut donc pas être retrouvée une fois que le document signé est sorti de son contexte de délégation.

Or, la signature électronique doit être persistante, et avec elle doivent persister les éléments pour retrouver les conditions sous lesquelles la signature a été exécutée, comme par exemple l'adjonction de la mention écrite "par intérim" dans le cas d'une signature manuscrite.

En outre, la délégation nécessite souvent, soit pour le titulaire, soit pour le délégué, soit pour les deux, une intervention auprès du moyen de gestion habilitant les délégations.

L'article intitulé "Proxy-based authorization and accounting for distributed systems", de B. C. Neuman, Proceedings of the International Conference on Distributed Computing Systems. Pittsburg, 25-28 Mai 1993, Los Alamitos, IEEE COMP. SOC. PRESS, vol. CONF. 13, pages 283-291, concerne une délégation au moyen d'un mandat délivré sous la forme d'un jeton par un titulaire à un délégué pour accomplir des actions pour lesquelles le titulaire est autorisé dans des serveurs. Le mandat contient des restrictions (actions autorisées) par rapport aux pouvoirs du titulaire et peut être délégué en cascade. Un mandat restreint comporte un certificat signé par le titulaire et une clé pour qu'un serveur vérifie que le mandat est bien délivré par le titulaire, et en outre une clé de mandat qui est une clé de cryptage correspondant à la clé dans le certificat qui sera utilisé par le délégué pour prouver la possession du mandat. La clé de mandat peut être publique et générée par le titulaire, et le certificat peut inclure la date d'expiration de la délégation. Le délégué envoie le certificat au serveur et peut utiliser la clé de mandat pour participer à une authentification, notamment en utilisant un nombre aléatoire du serveur. Un serveur d'autorisation délivre un mandat restreint au délégué. Cet article ne suggère aucun établissement par le titulaire d'un deuxième certificat avec des clés publiques de délégué et de titulaire et un attribut de délégation signés par une clé privée de titulaire en réponse à une requête de re-certification par le délégué.

La présente invention a pour objectif principal de permettre au délégué d'effectuer des actions cryptographiques avec sa clé sous l'autorité directe du titulaire, sans recourir par ailleurs à une autorité de certification, et d'introduire une trace de la délégation dans le certificat utilisé par le délégué au nom du titulaire.

Pour atteindre cet objectif, un procédé de certification électronique pour déléguer des actions d'un titulaire ayant un certificat électronique mémorisé dans un terminal de titulaire à un délégué ayant un premier certificat électronique mémorisé dans un terminal de délégué, le certificat du titulaire et le premier certificat du délégué comportant en outre des clés publiques respectives et des signatures de certificat d'autorités de certification respectives, est caractérisé en ce que, après une sollicitation de délégation du délégué par le titulaire, il comprend les étapes suivantes :
- dans le terminal de délégué, un établissement d'une requête de re-certification et une transmission de la requête de certification au terminal de titulaire,
- un établissement d'un deuxième certificat de délégué électronique dans le terminal de titulaire en réponse à la requête de re-certification, et une transmission du deuxième certificat au terminal de délégué, le deuxième certificat incluant des données qui sont la clé publique du titulaire, la clé publique de délégué et un attribut de délégation, et une signature des données avec une clé privée du titulaire, et
- dans le terminal de délégué, une validation de la signature dans le deuxième certificat de délégué transmis afin que le terminal utilise le deuxième certificat validé pour toute action déléguée par le titulaire au délégué.

L'invention hisse ainsi le titulaire en une autorité de certification pour le délégué, puisque les données contenues dans le deuxième certificat et particulièrement la clé publique de délégué sont signées par le titulaire.

La trace de la délégation est représentée par l'attribut de délégation. De préférence, cette trace est complétée ou remplacée par un attribut représentant une autorisation du titulaire à déléguer inclus dans le certificat du titulaire qui lui-même peut être inclus dans les données du deuxième certificat du délégué.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de télécommunications avec un terminal de titulaire et un terminal de délégué et divers serveurs pour la mise en oeuvre du procédé de certification électronique selon l'invention; et
- la figure 2 est un algorithme d'étapes principales du procédé de certification électronique de l'invention.

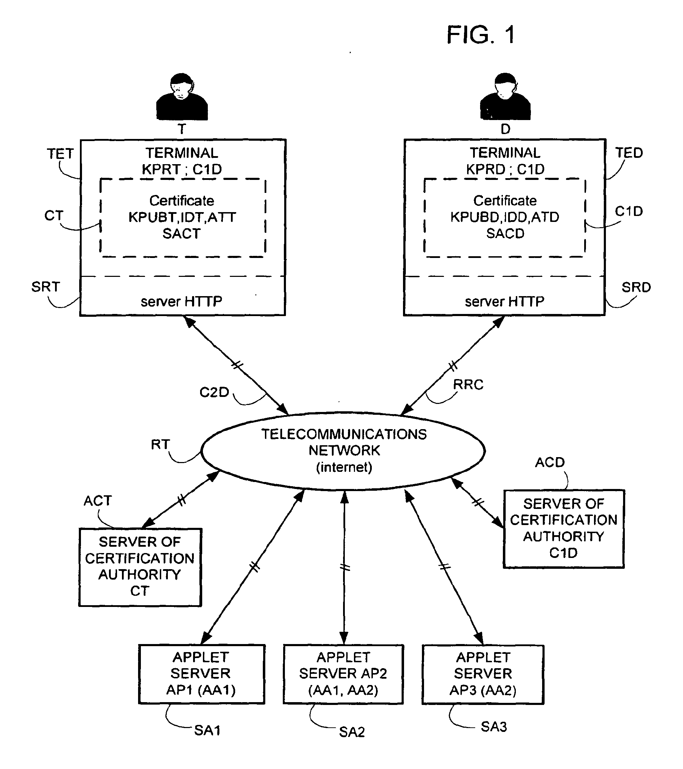

En référence à la figure 1, deux terminaux TET et TED sont respectivement attribués à un usager titulaire T et un usager délégué D. Les deux terminaux sont reliés par un réseau de télécommunications RT. Par exemple, les terminaux TET et TED sont des ordinateurs personnels et le réseau RT est un réseau local LAN du type Ethernet ou sans fil WAN, ou comprend des réseaux d'accès reliés par le réseau internet. L'un au moins des terminaux TET et TED peut être un objet électronique portable tel qu'un assistant numérique personnel PDA ou un ordinateur portable. Selon un autre exemple, au moins l'un des terminaux TET et TED est un radiotéléphone et le réseau RT comprend en outre le réseau de radiotéléphonie cellulaire numérique dont dépend le radiotéléphone.

Initialement, chaque terminal TET, TED a mémorisé un certificat électronique CT, C1D identifiant l'usager respectif T, D et contenant notamment une clé publique KPUBT, KPUBD de l'usager T, D possesseur du certificat, l'identité IDT, IDD comprenant par exemple les nom et prénom de l'usager, une période de validité, éventuellement des attributs ATT, ATD tels que l'identité de l'autorité de certification électronique ACT, ACD ayant créé le certificat, la clé publique de cette autorité et la désignation de l'algorithme servant à signer le certificat, etc. Le certificat CT, C1D comprend également une signature cryptographique SACT, SACD de toutes les données précédentes contenues dans le certificat CT, C1D, établie par l'autorité de certification ACT, ACD ayant émise le certificat. Comme montré à la figure 1, les autorités de certification ACT et ACD sont des serveurs reliés au réseau RT qui ont pour rôle de signer les certificats, de publier les certificats dans des annuaires et d'établir des listes de certificats révoqués, dites listes noires.

Chaque terminal TET, TED contient également une clé privée KPRT, KPRD correspondant à la clé publique KPUBT, KPUBD pour signer des messages à transmettre au moyen d'un algorithme asymétrique prédéterminé AA.

Initialement, il est supposé que le titulaire T est habilité à déléguer des actions au délégué D par l'autorité de certification ACT. Le titulaire T connaît le délégué D et par conséquent, le terminal TET du titulaire T a déjà mémorisé le premier certificat C1D du délégué D.

Une autorisation du titulaire T à déléguer peut être représentée par un attribut d'utilisation de clé (key usage) ATT délivré par l'autorité de certification ACT avec une profondeur de certification autorisée égale à 0 et inclus dans le certificat de titulaire CT ; l'autorité ACT émet alors une politique de certification compatible avec ce type d'attribut d'utilisation de clé. Le titulaire T devient avantageusement une autorité de certification à part entière à des fins de délégation. Le certificat de délégation que le terminal de titulaire TET établit, comme on le verra dans la suite, ne nécessite pas un contrôle plus spécifique que les contrôles dans les autres autorités de certification lors de la validation d'une chaîne de confiance.

En variante, l'autorité de certification de titulaire ACT représente le droit du titulaire à déléguer à la fois par un attribut d'utilisation de clé (key usage) de l'autorité de certification ACT avec une profondeur de certification autorisée de 0 et par un attribut de délégation spécifique.

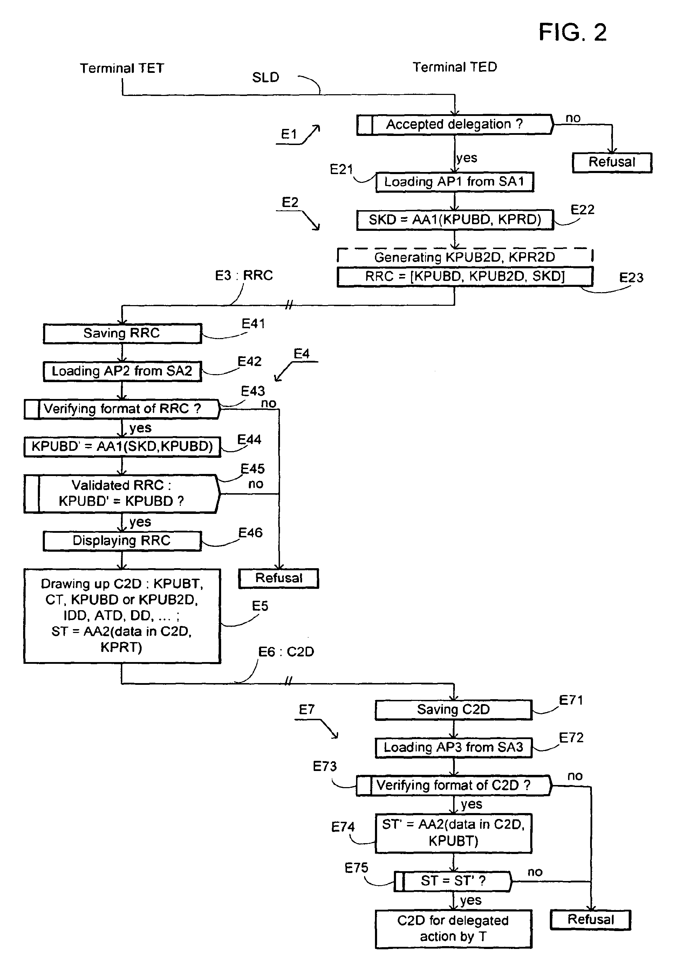

Une certification électronique pour déléguer les actions du titulaire T au délégué D comprend selon l'invention principalement des étapes E1 à E7, comme montré à la figure 2.

A l'étape E1, l'usager T effectue une sollicitation de délégation SLD du délégué D soit directement lors d'une rencontre des usagers T et D, soit par l'intermédiaire d'un message transmis par le terminal TET au terminal TED sous la forme par exemple d'un courrier électronique (e-mail).

Selon une autre variante, dans le terminal TED est implémenté un serveur logiciel SRD, par exemple un serveur web HTTP (HyperText Transfer Protocol). Le serveur SRD est un programme s'exécutant dans le terminal TED en réponse à un message de sollicitation de délégation SLD transmis par le terminal TET. Le serveur SRD établit alors une requête de re-certification RRC comme décrit ci-après afin de la transmettre au terminal TET. En variante, le serveur SRD est un serveur "client" de courrier électronique qui filtre des messages électroniques de sollicitation SLD en provenance de titulaires autorisés.

Précédemment à l'étape de sollicitation de délégation, quel que soit le type de serveur SRD, celui-ci peut décider d'authentifier le terminal TET soit par signature du message de sollicitation SLD sous forme de courrier électronique, soit par authentification selon un protocole de sécurisation prédéterminé du type SSL (Secure Sockets Layer) pour un serveur du type HTTP, soit par authentification à l'aide d'un identificateur et d'un mot de passe, etc. En pratique, un serveur SRT implémenté dans le terminal TET demande de préférence une authentification du serveur SRD, c'est-à-dire une authentification du délégué D par le titulaire T, ou éventuellement une authentification mutuelle entre les serveurs SRD et SRT. Le serveur logiciel SRT est du même type, par exemple HTTP/SSL, que le serveur SRD.

Si le titulaire T sollicitant la délégation n'est pas autorisé à déléguer au délégué D, ou si le délégué refuse la délégation sollicitée, la sollicitation SLD est rejetée par exemple en transmettant un message de refus prédéterminé depuis le terminal TED vers le terminal TET.

A l'étape E2, le terminal TED établit une requête de re-certification RRC. Pour établir celle-ci, l'étape E2 comprend notamment des sous-étapes E21, E22 et E23.

A la sous-étape E21, le terminal TED est mis en communication avec un serveur web d'applet SA1 installé par l'autorité de certification ACT du titulaire pour récupérer une applet Java AP1 qui permet au navigateur dans le terminal TED d'établir la requête RRC. Le chargement de l'applet AP1 dans le terminal TED peut être effectué avant l'étape E1 dans la mesure où le terminal TED a déjà établi récemment une requête de re-certification. L'applet AP1 contient notamment un algorithme asymétrique AA1 auquel sont appliquées la clé publique KPUBD, en tant que données, et la clé privée KPRD afin de déterminer une signature électronique SKD de la clé publique du délégué D, à l'étape E22. Puis le terminal TED établit la requête de re-certification RRC en y introduisant la clé publique KPUBD, la signature SKD de celle-ci établie précédemment, et éventuellement le premier certificat C1D permettant au titulaire T de vérifier la confiance dans le délégué D, à la sous-étape E23. La requête établie RRC est transmise par le terminal TED au terminal TET via le réseau RT, à l'étape E3.

Selon une variante, la requête de re-certification RRC est adressée à l'étape E3 par le terminal TED sous la forme d'un message de courrier électronique (e-mail) au terminal TET.

Après la transmission E3 de la requête de re-certification RRC depuis le terminal TED vers le terminal TET à travers le réseau de télécommunications RT, le terminal TET sauvegarde la requête RRC, par exemple dans le disque dur ou une mémoire RAM de celui-ci, à une sous-étape E41 d'une étape de validation de signature E4 comprenant des sous-étapes E42 à E46.

A la sous-étape E42, le terminal TET communique avec un deuxième serveur d'applet SA2 pour récupérer une applet Java AP2 destinée à vérifier la validité de la requête de re-certification reçue RRC, à moins que l'applet AP2 ait été déjà installée une fois pour toutes dans le terminal TET. Le serveur d'applet SA2 est également sous le contrôle de l'autorité de certification ACT et peut être confondu avec le premier serveur d'applet SA1.

Puis aux sous-étapes E43 à E45, au moyen de l'applet chargée AP2, le terminal de titulaire TET vérifie le format de la requête de re-certification reçue RRC et valide celle-ci par rapport à la signature SKD. La validation de la requête RRC, c'est-à-dire de la signature SKD, est effectuée en appliquant la signature SKD, en tant que données, à l'algorithme AA1 contenu dans l'applet AP2 et la clé publique KPUBD extrait de la requête reçue RRC afin de produire normalement une clé publique KPUBD' qui est comparée à la clé publique KPUBD extraite de la requête RRC, à la sous-étape E45. Si le résultat de la vérification à la sous-étape E43 ou de la validation aux sous-étapes E44-E45 est erroné, le titulaire T peut décider de refuser et d'arrêter la délégation en cours, ou de solliciter à nouveau une délégation en émettant une sollicitation de délégation SLD à l'étape E1.

Si la requête RRC est validée, c'est-à-dire en l'occurrence si la clé publique KPUBD est validée à la sous-étape E45, le terminal T affiche la requête de re-certification RRC à la sous-étape E46. Par exemple, le terminal T affiche notamment le certificat C1D qui est extrait de la requête RRC lorsque la requête RRC le contient ou qui est lu dans la mémoire du terminal TET, afin que le titulaire T confirme la validation de la requête reçue RRC et la poursuite de la certification électronique pour délégation en passant à l'étape principale d'établissement de deuxième certificat de délégué E5. En variante, le titulaire n'intervient pas à l'étape E46, et la validation de la requête RRC est entièrement automatique dans le terminal TET.

A l'étape E5, le terminal de titulaire TET établit sur la base du premier certificat C1D un deuxième certificat de délégation électronique C2D qui sera à substituer au premier certificat C1D par le terminal de délégué TED lorsque le délégué D agira au nom et pour le compte du titulaire T.

Le deuxième certificat de délégué C2D est établi au moyen de la deuxième applet AP2 et inclut notamment une clé publique KPUBT du titulaire, la clé publique KPUBD du délégué D, l'identité de délégué IDD, un attribut de délégation ATD du type "délégué", ou bien une mention "par procuration de" ou "par intérim de" de préférence suivie du nom du titulaire T, une durée de délégation DD fixée par le titulaire T, et d'autres attributs pouvant être nécessaires pour pouvoir mandater le délégué D. Toutes les données précédentes incluses dans le certificat C2D sont appliquées à un algorithme asymétrique AA2 qui est inclus dans l'applet chargée AP2 et dont la clé est constituée par la clé privée KPRT du titulaire T correspondant à la clé publique KPUBT. L'algorithme AA2 exécuté à la sous-étape E5 délivre une signature ST du deuxième certificat C2D.

Le titulaire T se comporte ainsi comme une autorité de certification électronique pour le délégué D pendant la durée de délégation DD. Le certificat C2D est établi au moyen d'un formulaire affiché à l'écran du terminal TET afin que l'usager T y introduise certaines données telles que la durée de délégation DD, une identité du titulaire telle que le nom ou un surnom du titulaire dans l'attribut de délégation ATD, etc.

En variante simple, le deuxième certificat C2D ne contient aucune option particulière concernant les attributs, et notamment ne contient pas l'attribut de délégation ATD dans la mesure où le titulaire T ayant émis ce certificat est déjà possesseur d'un certificat l'autorisant à déléguer.

Selon une autre variante, un générateur aléatoire dans le terminal de délégué TED génère une deuxième clé publique KPUB2D ainsi qu'une deuxième clé privée KPR2D qui sont dédiées à la délégation et ainsi serviront à sécuriser et échanger des messages avec le terminal TED seulement pour des actions déléguées au délégué D par le titulaire T. Comme indiqué en trait pointillé à l'étape E23 dans la figure 2, la deuxième clé publique KPUB2D est incluse dans la requête de re-certification RRC à l'étape E3, et le terminal de titulaire TET extrait de la requête de re-certification sauvegardée RRC la clé publique KPUB2D afin de l'introduire dans le deuxième certificat C2D à établir, à la place de la clé publique normale KPUBD du délégué D.

Puis à l'étape E6, l'applet AP2 dans le terminal TET transmet le deuxième certificat C2D au terminal de délégué TED à travers le serveur SRT, le réseau RT et le serveur SRD, ou bien sous la forme d'un message de courrier électronique.

Dans le terminal de délégué TED, l'étape E7 pour valider le deuxième certificat électronique C2D comprend des sous-étapes E71 à E76.

A la sous-étape E71, le terminal TED sauvegarde le certificat reçu C2D dans son disque dur ou dans une mémoire RAM par exemple. Puis à la sous-étape E72, le terminal TED récupère dans un troisième serveur d'applet SA3 qui dépend de l'autorité de certification ACT, une troisième applet AP3 destinée à valider le certificat reçu C2D, si l'applet n'est pas déjà chargée dans le terminal TED. Le serveur SA3 peut être confondu avec au moins le serveur SA1 afin de charger une applet AP1 confondue avec l'applet AP3 à l'étape E21. Selon une autre variante, les serveurs d'applet SA1, SA2 et SA3 sont fusionnés en un unique serveur qui contient les applets AP1, AP2 et AP3.

Après une vérification du format du certificat reçu C2D à la sous-étape E73, le terminal TED procède à la validation du certificat C2D en appliquant les données contenues dans celui-ci et la clé publique KPUBT également incluse dans l'applet AP3 à l'algorithme asymétrique AA2 identifié dans le certificat C2D et récupéré dans l'applet AP3. L'exécution de l'algorithme AA2 produit une signature ST' qui est comparée à la signature ST extraite du certificat reçu C2D, à la sous-étape E75. Si aux sous-étapes E73 ou E75, la vérification ou la validation n'est pas satisfaisante, le terminal du délégué TED refuse le deuxième certificat C2D par exemple en transmettant un message de refus prédéterminé au terminal TET. Dans le cas contraire, le terminal TED mémorise le certificat C2D ainsi validé pendant toute la durée de la délégation DD afin d'utiliser le deuxième certificat C2D et notamment sa clé privée KPRD ou KPR2D pour diverses actions cryptographiques effectuées par le délégué D notamment depuis le terminal délégué TED au nom et pour le compte du titulaire T.

Selon le support de la clé composite de délégué [KPUBD, KPRD], le deuxième certificat C2D est intégré plus ou moins automatiquement dans le terminal de délégué TED. Si la clé composite de délégué est une clé logicielle gérée par un navigateur, ou par un outil de récupération et de transfert de message électronique, ou par un système d'exploitation, ou par un serveur logiciel tel que le serveur précité SRD, ou par tout autre logiciel adéquat implémenté dans le terminal TED, le certificat C2D est intégré par ce logiciel dans le terminal TED afin de disposer de ce deuxième certificat en correspondance avec la clé composite de délégué existante pour l'utiliser ultérieurement, pour toutes les actions déléguées.

Selon une autre variante, si la clé composite de délégué [KPUBD, KPRD] ou plus généralement le certificat de délégué C1D est mémorisé dans un support d'enregistrement matériel amovible du terminal de délégué TED, tel qu'une carte à puce ou un jeton USB (token USB (Universal Serial Bus)), l'outil de gestion dans ce support demande lui-même la re-certification de la clé de délégué publique existante et commande l'enregistrement du deuxième certificat de délégué C2D dans le support amovible à l'étape E7. Si une deuxième clé [KPUB2D, KPR2D] est générée à l'étape E2, l'outil de gestion du support intègre le deuxième certificat C2D. L'introduction du deuxième certificat reçu C2D dans le support matériel amovible est de préférence automatisée, sans l'intervention de l'usager délégué D. Cependant, en variante, cette introduction de deuxième certificat peut être effectuée semi-automatiquement, en invitant par affichage dans le terminal TED le délégué D à insérer le support matériel amovible dans le terminal TED afin d'y mémoriser le certificat C2D. Le support d'enregistrement amovible permet au délégué d'utiliser tout autre terminal pour des actions déléguées, doté d'un lecteur approprié du support d'enregistrement amovible.

Lorsque la clé privée KPRD du délégué D a été compromise, c'est-à-dire est connue par au moins un tiers ou a été subtilisée, le délégué D révoque tous ces certificats reposant sur cette clé, y compris le certificat de délégation C2D. Pour révoquer le certificat C2D, le terminal TED s'adresse à un serveur de révocation qui est connu du délégué D et qui peut être installé par le titulaire et lié au serveur ACD de l'autorité de certification du délégué, ou bien s'adresse directement, ou via un serveur personnel dédié à la révocation de délégation, au serveur d'autorité de certification ACT du titulaire T.

Selon encore une autre variante, lors de l'établissement du certificat de délégation C2D à l'étape E5, le terminal TE inclut dans les données du deuxième certificat C2D des informations relatives à une révocation du certificat C2D, par exemple l'adresse d'un serveur de révocation prédéterminé.

Afin de faciliter l'établissement de la chaîne de confiance depuis le certificat de délégation C2D, le terminal de délégué TED adjoint le certificat de titulaire CT au certificat de délégation C2D pour toute action déléguée par le titulaire T. Selon cette variante, le certificat CT du titulaire T est également inclus dans les données du deuxième certificat C2D transmis par le terminal de titulaire TET au terminal de délégué TED à l'étape E6 afin que le terminal TED extrait le certificat de titulaire CT du certificat sauvegardé C2D.

A partir du certificat de titulaire CT, la chaîne de confiance est établie et vérifiée comme en l'absence de délégation, pour n'importe quelle chaîne de confiance. La vérification de la chaîne de confiance de délégation, c'est-à-dire y compris avec le certificat de délégation C2D, implique la vérification des attributs notamment dans le certificat de titulaire CT par l'autorité de certification ACT et dans le certificat de délégation C2D par le terminal TET.

Selon encore une autre variante, notamment les étapes initiales E2, E3 et E4 relatives à l'établissement et la transmission de la requête de recertification RRC et à la validation de la signature électronique SKD sont supprimées afin d'accroître la rapidité d'exécution de la certification électronique selon l'invention. Dans cette variante, la certification électronique commence avant l'étape d'établissement de certificat E5, par une génération d'une clé privée KPRT du titulaire T dans le terminal TET afin que le terminal TET établisse à l'étape E5 la signature ST des données du certificat C2D au moyen de la clé privée générée KPRT. Les données telles que la clé publique KPUBT du titulaire et celles KPUBD, ATD, DD contenues dans le premier certificat de délégué C1D ont été préalablement mémorisées dans le terminal TET. Puis la clé privée générée KPRT est transmise sensiblement en parallèle avec le deuxième certificat de délégué électronique C2D au terminal de délégué TED, à l'étape E6 ; par exemple, la clé privée KPRT est cryptée dans le terminal TET en fonction d'un mot de passe composé par le titulaire T, ou transmise par un canal, tel qu'une transmission orale par téléphone entre le titulaire T et le délégué D, autre que le canal de transmission entre les terminaux TET et TED via le réseau RT.

## Revendications

1. Procédé de certification électronique pour déléguer des actions d'un titulaire (T) ayant un certificat électronique (CT) mémorisé dans un terminal de titulaire (TET) à un délégué (D) ayant un premier certificat électronique (C1D) mémorisé dans un terminal de délégué (TED), le certificat (CT) du titulaire et le premier certificat (C1D) du délégué comportant en outre des clés publiques respectives (KPUBT, KPUBD) et des signatures de certificat (SACT, SACD) d'autorités de certification respectives (ACT, ACD), **caractérisé en ce que**, après une sollicitation de délégation (E1) du délégué (D) par le titulaire (T), il comprend les étapes suivantes :
- dans le terminal de délégué (TED), un établissement (E2) d'une requête de re-certification (RRC) et une transmission (E3) de la requête de re-certification (RRC) au terminal de titulaire (TET),
- un établissement (E5) d'un deuxième certificat électronique de délégué (C2D) dans le terminal de titulaire (TET) en réponse à la requête de re-certification, et une transmission (E6) du deuxième certificat au terminal de délégué (TED), le deuxième certificat (C2D) incluant des données qui sont la clé publique (KPUBT) du titulaire, la clé publique (KPUBD) du délégué et un attribut de délégation (ATD), et incluant une signature (ST) des données avec une clé privée (KPRT) du titulaire, et
- dans le terminal de délégué (TED), une validation (E7) de la signature (ST) dans le deuxième certificat de délégué transmis (C2D) afin que le terminal de délégué (TED) utilise le deuxième certificat (C2D) pour toute action déléguée par le titulaire (T) au délégué (D).

2. Procédé conforme à la revendication 1, selon lequel les données dans le deuxième certificat de délégué (C2D) incluent une durée de délégation (DD).

3. Procédé conforme à la revendication 1 ou 2, selon lequel les données dans le deuxième certificat de délégué (C2D) incluent des informations relatives à une révocation du deuxième certificat.

4. Procédé conforme à l'une quelconque des revendications 1 à 3, selon lequel le certificat de titulaire (CT) est inclus dans les données du deuxième certificat de délégué (C2D).

5. Procédé conforme à l'une quelconque des revendications 1 à 4, selon lequel un attribut (ATT) représentant une autorisation du titulaire (T) à déléguer est inclus dans le certificat de titulaire (CT) .

6. Procédé conforme à l'une quelconque des revendications 1 à 5, comprenant une détermination (E22) d'une signature (SKD) de la clé publique (KPUBD) du délégué (D) dans le terminal de délégué (TED) en fonction d'une clé privée (KPRD) du délégué, la clé publique de délégué (KPUBD) et la signature (SKD) étant introduites dans la requête de re-certification (RRC), et une validation (E44, E45) de la signature (SKD) extraite de la requête de re-certification reçue en fonction de la clé publique de délégué (KPUBD) par le terminal de titulaire (TET), avant l'établissement (E5) du deuxième certificat de délégué (C2D).

7. Procédé de certification électronique pour déléguer des actions d'un titulaire (T) ayant un certificat électronique (CT) mémorisé dans un terminal de titulaire (TET) à un délégué (D) ayant un premier certificat électronique (C1D) mémorisé dans un terminal de délégué (TED), le certificat (CT) du titulaire comportant en outre une clé publique (KPUBT) et une signature de certificat (SACT) d'autorité de certification (ACT) et le premier certificat (C1D) du délégué comportant en outre une première clé publique (KPUBD) et une signature de certificat (SACD) d'autorité de certification (ACD), **caractérisé en ce que**, après une sollicitation de délégation (E1) du délégué (D) par le titulaire (T), il comprend les étapes suivantes :
- dans le terminal de délégué (TED), une génération (E23) d'une deuxième clé publique (KPUB2D) de délégué et d'une clé privée (KPR2D) de délégué, un établissement (E2) d'une requête de re-certification (RRC) incluant la deuxième clé publique (KPUB2D) et une transmission (E3) de la requête de re-certification (RRC) au terminal de titulaire (TET),
- un établissement (E5) d'un deuxième certificat électronique de délégué (C2D) dans le terminal de titulaire (TET) en réponse à la requête de re-certification, et une transmission (E6) du deuxième certificat au terminal de délégué (TED), le deuxième certificat (C2D) incluant des données qui sont la clé publique (KPUBT) du titulaire, la deuxième clé publique (KPUB2D) du délégué et un attribut de délégation (ATD), et incluant une signature (ST) des données avec une clé privée (KPRT) du titulaire, et
- dans le terminal de délégué (TED), une validation (E7) de la signature (ST) dans le deuxième certificat de délégué transmis (C2D) afin que le terminal de délégué (TED) utilise le deuxième certificat (C2D) pour toute action déléguée par le titulaire (T) au délégué (D).

8. Procédé de certification électronique pour déléguer des actions d'un titulaire (T) ayant un certificat électronique (CT) mémorisé dans un terminal de titulaire (TET) à un délégué (D) ayant un premier certificat électronique (C1D) mémorisé dans un terminal de délégué (TED), le certificat (CT) du titulaire et le premier certificat (C1D) du délégué comportant en outre des clés publiques respectives (KPUBT, KPUBD) et des signatures de certificat (SACT, SACD) d'autorités de certification respectives (ACT, ACD), **caractérisé en ce que**, après une sollicitation de délégation (E1) du délégué (D) par le titulaire (T), il comprend les étapes suivantes :
- un établissement (E5) d'un deuxième certificat électronique de délégué (C2D) dans le terminal de titulaire (TET), et une transmission (E6) du deuxième certificat au terminal de délégué (TED), le deuxième certificat (C2D) incluant des données qui sont la clé publique (KPUBT) du titulaire, la clé publique (KPUBD) du délégué et un attribut de délégation (ATD), et incluant une signature (ST) des données avec une clé privée (KPRT) du titulaire, ladite clé privée étant préalablement générée dans le terminal de titulaire (TET) et transmise en parallèle avec le deuxième certificat de délégué électronique (C2D) au terminal de délégué (TED), et
- dans le terminal de délégué (TED), une validation (E7) de la signature (ST) dans le deuxième certificat de délégué transmis (C2D) afin que le terminal de délégué (TED) utilise le deuxième certificat (C2D) pour toute action déléguée par le titulaire (T) au délégué (D).

9. Procédé conforme à l'une quelconque des revendications 1 à 8, selon lequel le deuxième certificat de délégué (C2D) est enregistré dans un support d'enregistrement amovible du terminal de délégué (TED) .

## Claims

1. Electronic certification method for delegating actions of a titleholder (T) having an electronic certificate (CT) stored in a titleholder terminal (TET) to a delegate (D) having a first electronic certificate (C1D) stored in a delegate terminal (TED), the certificate (CT) of the titleholder and the first certificate (C1D) of the delegate further including respective public keys (KPUBT, KPUBD) and certificate signatures (SACT, SACD) of respective certification authorities (ACT, ACD), **characterized in that** it includes, after a request for delegation (E1) to the delegate (D) by the titleholder (T), the following steps:
- in the delegate terminal (TED), drawing up (E2) a recertification request (RRC) and sending (E3) the recertification request (RRC) to the titleholder terminal (TET),
- in the titleholder terminal (TET), drawing up (E5) a second electronic delegate certificate (C2D) in response to the recertification request and sending (E6) the second certificate to the delegate terminal (TED), the second certificate (C2D) including data which are the public key (KPUBT) of the titleholder, the public key (KPUBD) of the delegate and a delegation attribute (ATD), and including a signature (ST) of the data with a private key (KPRT) of the titleholder, and
- in the delegate terminal (TED), validating (E7) the signature (ST) in the second delegate certificate sent (C2D) in order for the delegate terminal (TED) to use the second certificate (C2D) for any action delegated by the titleholder (T) to the delegate (D).

2. Method according to Claim 1, whereby the data in the second delegate certificate (C2D) include a delegation duration (DD).

3. Method according to Claim 1 or 2, whereby the data in the second delegate certificate (C2D) include information relating to revocation of the second certificate.

4. Method according to any one of Claims 1 to 3, whereby the titleholder certificate (CT) is included in the data of the second delegate certificate (C2D).

5. Method according to any one of Claims 1 to 4, whereby an attribute (ATT) representing authorization of the titleholder (T) to delegate is included in the titleholder certificate (CT).

6. Method according to any one of Claims 1 to 5, including determination (E22) of a signature (SKD) of the public key (KPUBD) of the delegate (D) in the delegate terminal (TED) as a function of a private key (KPRD) of the delegate, the delegate public key (KPUBD) and the signature (SKD) being integrated into the recertification request (RRC), and validation (E44, E45) of the signature (SKD) extracted from the received recertification request as a function of the delegate public key (KPUBD) by the titleholder terminal (TET), before drawing up (E5) the second delegate certificate (C2D).

7. Electronic certification method for delegating actions of a titleholder (T) having an electronic certificate (CT) stored in a titleholder terminal (TET) to a delegate (D) having a first electronic certificate (C1D) stored in a delegate terminal (TED), the certificate (CT) of the titleholder further including a public key (KPUBT) and a certificate signature (SACT) of certification authority (ACT), and the first certificate (C1D) of the delegate further including a first public key (KPUBD) and a certificate signature (SACD) of certification authority (ACD), **characterized in that** it includes, after a request for delegation (E1) to the delegate (D) by the titleholder (T), the following steps:
- in the delegate terminal (TED), generation (E23) of a second delegate public key (KPUB2D) and of a delegate private key (KPR2D), drawing up (E2) a recertification request (RRC) including the second public key (KPUB2D) and sending (E3) the recertification request (RRC) to the titleholder terminal (TET),
- in the titleholder terminal (TET), drawing up (E5) a second electronic delegate certificate (C2D) in response to the recertification request and sending (E6) the second certificate to the delegate terminal (TED), the second certificate (C2D) including data which are the public key (KPUBT) of the titleholder, the second public key (KPUB2D) of the delegate and a delegation attribute (ATD), and including a signature (ST) of the data with a private key (KPRT) of the titleholder, and
- in the delegate terminal (TED), validating (E7) the signature (ST) in the second delegate certificate sent (C2D) in order for the delegate terminal (TED) to use the second certificate (C2D) for any action delegated by the titleholder (T) to the delegate (D).

8. Electronic certification method for delegating actions of a titleholder (T) having an electronic certificate (CT) stored in a titleholder terminal (TET) to a delegate (D) having a first electronic certificate (C1D) stored in a delegate terminal (TED), the certificate (CT) of the titleholder and the first certificate (C1D) of the delegate further including respective public keys (KPUBT, KPUBD) and certificate signatures (SACT, SACD) of respective certification authorities (ACT, ACD), **characterized in that** it includes, after a request for delegation (E1) to the delegate (D) by the titleholder (T), the following steps:
- in the titleholder terminal (TET),drawing up (E5) a second electronic delegate certificate (C2D) and sending (E6) the second certificate to the delegate terminal (TED), the second certificate (C2D) including data which are the public key (KPUBT) of the titleholder, the public key (KPUBD) of the delegate and a delegation attribute (ATD), and including a signature (ST) of data with a private key (KPRT) of the titleholder, said private key being generated beforehand in the titleholder terminal (TET) and sent at the same time as the second electronic delegate certificate (C2D) to the delegate terminal (TED), and
- in the delegate terminal (TED), validating (E7) the signature (ST) in the second delegate certificate sent (C2D) in order for the delegate terminal (TED) to use the second certificate (C2D) for any action delegated by the titleholder (T) to the delegate (D).

9. Method according to any one of Claims 1 to 8, whereby the second delegate certificate (C2D) is stored on a removable storage medium of the delegate terminal (TED).

## Patentansprüche

1. Elektronisches Zertifizierungsverfahren, um Aktionen eines Inhabers (T), der ein elektronisches Zertifikat (CT) in einem Inhaberterminal (TET) gespeichert hat, an einen Vertreter (D) zu delegieren, der ein erstes elektronisches Zertifikat (C1D) in einem Vertreterterminal (TED) gespeichert hat, wobei das Zertifikat (CT) des Inhabers und das erste Zertifikat (C1D) des Vertreters außerdem jeweilige öffentliche Schlüssel (KPUBT, KPUBD) und Zertifikat-Signaturen (SACT, SACD) von jeweiligen Zertifizierungsstellen (ACT, ACD) aufweisen, **dadurch gekennzeichnet, dass** es nach einer Delegierungsbeanspruchung (E1) des Vertreters (D) durch den Inhaber (T) die folgenden Schritte aufweist:
- eine Erstellung (E2) einer Neuzertifizierungsanforderung (RRC) im Vertreterterminal (TED) und eine Übertragung (E3) der Neuzertifizierungsanforderung (RRC) an das Inhaberterminal (TET),
- eine Erstellung (ES) eines zweiten elektronischen Vertreterzertifikats (C2D) im Inhaberterminal (TET) als Antwort auf die Neuzertifizierungsanforderung, und eine Übertragung (E6) des zweiten Zertifikats an das Vertreterterminal (TED), wobei das zweite Zertifikat (C2D) Daten umfasst, die der öffentliche Schlüssel (KPUBT) des Inhabers, der öffentliche Schlüssel (KPUBD) des Vertreters und ein Delegationsattribut (ATD) sind, und eine Signatur (ST) der Daten mit einem privaten Schlüssel (KPRT) des Inhabers umfasst, und
- im Vertreterterminal (TED) eine Validierung (E7) der Signatur (ST) im zweiten übertragenen Vertreterzertifikat (C2D), damit das Vertreterterminal (TED) das zweite Zertifikat (C2D) für jede Aktion verwendet, die vom Inhaber (T) an den Vertreter (D) delegiert wird.

2. Verfahren nach Anspruch 1, gemäß dem die Daten im zweiten Vertreterzertifikat (C2D) eine Delegationsdauer (DD) enthalten.

3. Verfahren nach Anspruch 1 oder 2, gemäß dem die Daten im zweiten Vertreterzertifikat (C2D) Informationen bezüglich eines Widerrufs des zweiten Zertifikats umfassen.

4. Verfahren nach einem der Ansprüche 1 bis 3, gemäß dem das Inhaberzertifikat (CT) in den Daten des zweiten Vertreterzertifikats (C2D) enthalten ist.

5. Verfahren nach einem der Ansprüche 1 bis 4, gemäß dem ein Attribut (ATT), das eine Delegationsberechtigung des Inhabers (T) darstellt, im Inhaberzertifikat (CT) enthalten ist.

6. Verfahren nach einem der Ansprüche 1 bis 5, das eine Bestimmung (E22) einer Signatur (SKD) des öffentlichen Schlüssels (KPUBD) des Vertreters (D) im Vertreterterminal (TED) in Abhängigkeit von einem privaten Schlüssel (KPRD) des Vertreters, wobei der öffentliche Vertreterschlüssel (KPUBD) und die Signatur (SKD) in die Neuzertifizierungsanforderung (RRC) eingeführt werden, und eine Validierung (E44, E45) der aus der empfangenen Neuzertifizierungsanforderung entnommenen Signatur (SKD) in Abhängigkeit vom öffentlichen Vertreterschlüssel (KPUBD) durch das Inhaberterminal (TET) vor der Erstellung (E5) des zweiten Vertreterzertifikats (C2D) enthält.

7. Elektronisches Zertifizierungsverfahren, um Aktionen eines Inhabers (T), der ein elektronisches Zertifikat (CT) in einem Inhaberterminal (TET) gespeichert hat, an einen Vertreter (D) zu delegieren, der ein erstes elektronisches Zertifikat (C1D) in einem Vertreterterminal (TED) gespeichert hat, wobei das Zertifikat (CT) des Inhabers außerdem einen öffentlichen Schlüssel (KPUBT) und eine Zertifikat-Signatur (SACT) einer Zertifizierungsstelle (ACT) enthält, und das erste Zertifikat (C1D) des Vertreters außerdem einen ersten öffentlichen Schlüssel (KPUBD) und eine Zertifikat-Signatur (SACD) einer Zertifizierungsstelle (ACD) enthält, **dadurch gekennzeichnet, dass** es nach einer Delegierungsbeanspruchung (E1) des Vertreters (D) durch den Inhaber (T) die folgenden Schritte aufweist:
- im Vertreterterminal (TED) eine Erzeugung (E23) eines zweiten öffentlichen Vertreterschlüssels (KPUB2D) und eines privaten Vertreterschlüssels (KPR2D), eine Erstellung (E2) einer Neuzertifizierungsanforderung (RRC), die den zweiten öffentlichen Schlüssel (KPUB2D) umfasst, und eine Übertragung (E3) der Neuzertifizierungsanforderung (RRC) an das Inhaberterminal (TET),
- eine Erstellung (E5) eines zweiten elektronischen Vertreterzertifikats (C2D) im Inhaberterminal (TET) als Antwort auf die Neuzertifizierungsanforderung, und eine Übertragung (E6) des zweiten Zertifikats an das Vertreterterminal (TED), wobei das zweite Zertifikat (C2D) Daten umfasst, die der öffentliche Schlüssel (KPUBT) des Inhabers, der zweite öffentliche Schlüssel (KPUB2D) des Vertreters und ein Delegationsattribut (ATD) sind, und eine Signatur (ST) der Daten mit einem privaten Schlüssel (KPRT) des Inhabers umfasst, und
- im Vertreterterminal (TED) eine Validierung (E7) der Signatur (ST) im zweiten übertragenen Vertreterzertifikat (C2D), damit das Vertreterterminal (TED) das zweite Zertifikat (C2D) für jede vom Inhaber (T) an den Vertreter (D) delegierte Aktion verwendet.

8. Elektronisches Zertifizierungsverfahren, um Aktionen eines Inhabers (T), der ein elektronisches Zertifikat (CT) in einem Inhaberterminal (TET) gespeichert hat, an einen Vertreter (D) zu delegieren, der ein erstes elektronisches Zertifikat (C1D) in einem Vertreterterminal (TED) gespeichert hat, wobei das Zertifikat (CT) des Inhabers und das erste Zertifikat (C1D) des Vertreters außerdem jeweilige öffentliche Schlüssel (KPUBT, KPUBD) und Zertifikat-Signaturen (SACT, SACD) von jeweiligen Zertifizierungsstellen (ACT, ACD) aufweisen, **dadurch gekennzeichnet, dass** es nach einer Delegationsbeanspruchung (E1) des Vertreters (D) durch den Inhaber (T) die folgenden Schritte aufweist:
- eine Erstellung (E5) eines zweiten elektronischen Vertreterzertifikats (C2D) im Inhaberterminal (TET), und eine Übertragung (E6) des zweiten Zertifikats an das Vertreterterminal (TED), wobei das zweite Zertifikat (C2D) Daten umfasst, die der öffentliche Schlüssel (KPUBT) des Inhabers, der öffentliche Schlüssel (KPUBD) des Vertreters und ein Delegationsattribut (ATD) sind, und eine Signatur (ST) der Daten mit einem privaten Schlüssel (KPRT) des Inhabers umfasst, wobei der private Schlüssel vorher im Inhaberterminal (TET) erzeugt und parallel mit dem zweiten elektronischen Vertreterzertifikat (C2D) an das Vertreterterminal (TED) übertragen wird, und
- im Vertreterterminal (TED) eine Validierung (E7) der Signatur (ST) im zweiten übertragenen Vertreterzertifikat (C2D), damit das Vertreterterminal (TED) das zweite Zertifikat (C2D) für jede vom Inhaber (T) an den Vertreter (D) delegierte Aktion verwendet.

9. Verfahren nach einem der Ansprüche 1 bis 8, gemäß dem das Vertreterzertifikat (C2D) in einem entfernbaren Aufzeichnungsträger des Vertreterterminals (TED) gespeichert ist.
